# EUROPEAN PATENT APPLICATION

(11) **EP 1 152 162 A2**
(43) Date of publication of application: **07.11.2001**
(21) Application number: 01108803.6
(22) Date of filing: 07.04.2001
(51) Int. Cl.: F16D 25/08, F16D 13/72

(54) **Centralized hydraulic actuator for friction clutch**

(30) Priority: 05.05.2000 GB 0010774
(71) Applicant: Automotive Products UK Limited, Leamington Spa, Warwickshire CV31 3ZL (GB)
(72) Inventor: Young, Alastair John, Kenilworth, Warwickshire CV8 1DW (GB)
(74) Representative: Morrall, Roger

(57) **Abstract**

A clutch assembly is disclosed having a clutch cover (11), a pressure plate (12) mounted on the cover, a diaphragm spring (14) biasing the pressure plate away from the cover to engage the clutch, clutch release levers (16), and an annular hydraulic slave cylinder (17) mounted on the cover via a support bearing (20). The slave cylinder is moved axially relative to the cover when actuated to move the release levers and hence release the clutch. Rotation of the slave cylinder about the axis (X - X) of the clutch is resisted by a roller (32) carried by the slave cylinder which moves axially during actuation of the clutch in rolling contact between two circumferentially spaced flanges (33,34) carried on the clutch housing. The clutch housing also includes apertures (50) angled to provide vanes (51) which promote a flow of cooling air to cool the pressure plate.

## Description

This invention relates to clutches and in particular to vehicle clutches for use in vehicle drive-lines to connect a vehicle engine with an associated transmission.

There is a requirement to provide such a clutch which is actuated by an annular hydraulic slave cylinder mounted on a clutch cover.

Thus according to the present invention there is provided a clutch assembly comprising:-
- a clutch cover,
- a pressure plate mounted on the cover,
- spring means biasing the pressure plate away from the cover to engage the clutch,
- lever means for releasing the clutch, and
- an annular hydraulic slave cylinder mounted on the cover via a support bearing, the slave cylinder moving axially relative to the cover when actuated to move the lever means and hence release the clutch,
- the assembly being characterised by the provision of first abutment means mounted on the slave cylinder for rolling contact with second abutments means carried by an enclosing clutch housing as the slave cylinder moves axially during actuation of the clutch, the rolling contact of said first and second abutment means resisting rotation of the slave cylinder about the axis of rotation of the clutch cover.

Preferably one of the abutment means comprises a roller which rolls along the other abutment means which is in the form of a flange.

In a preferred construction the roller rolls between two circumferentially spaced flanges carried on a surrounding clutch housing.

The slave cylinder may comprise an annular piston received in an annular bore in a slave housing to define a working chamber, the slave housing being connected with the lever means via a clutch release bearing so that pressurisation of the working chamber axially moves the slave housing to disengage the clutch.

The clutch assembly may include a vibration isolating means (e.g. a polymeric layer) between the clutch cover and the slave cylinder as disclosed in the Applicant's co-pending application WO99/64759.

The invention also provides a clutch cover assembly comprising:-
- a clutch cover,
- a pressure plate mounted on the cover,
- spring means biasing the pressure plate away from the cover to engage the clutch, and
- the assembly being characterised in that vane means are formed on the cover for promoting a flow of air through apertures in the cover to cool the pressure plate.

The vane means may be shaped to draw air into the cover through the apertures, the air subsequently exiting through outer peripheral zones of the cover.

The present invention will now be described, by way of example only, with reference to the accompanying drawings in which :-
Figure 1 shows a cross section through a clutch assembly in accordance with the present invention;

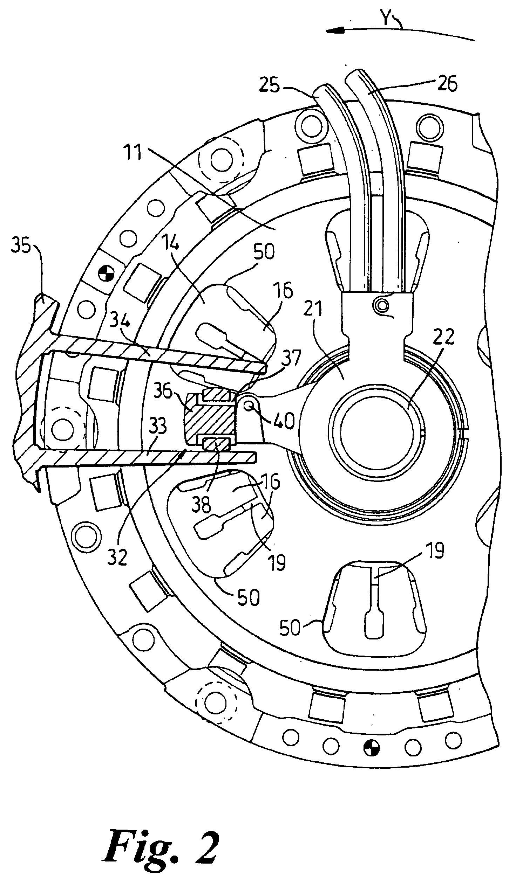

Figure 2 shows a view in the direction of arrow A of figure 1, and
Figures 3 and 4 show details of cooling vanes incorporated into the cover of the clutch assembly.

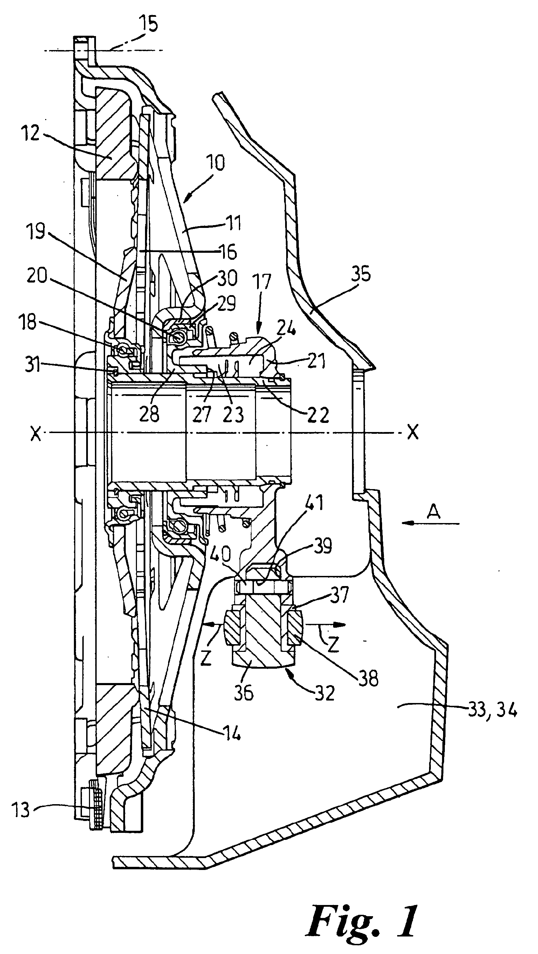

Referring to figure 1, the clutch assembly 10 has a clutch cover 11 which supports a pressure pate 12 via conventional torque straps 13. A diaphragm spring 14 biases the pressure plate 12 away from the cover 11 in a conventional manner towards a flywheel (not shown) to which the cover 11 is bolted at 15.

As is conventional, the inner portion of diaphragm spring 14 is in the form of finger-like levers 16 which are axially displaced to release the clutch by an annular hydraulic concentric slave cylinder 17 via a clutch release bearing 18 and an annular plate 19. The concentric slave cylinder 17 is mounted on cover 11 via a support bearing 20. The concentric slave cylinder comprises a housing formed from components 21 and 22 and an annular piston 23 which slides within the housing to define a working chamber 24. Housing 21, 22 is provided with an inlet pipe 25 connected with an associated master cylinder (not shown) and a bleed pipe 26 both of which open into working chamber 24. Shoulder 27 on piston 23 contacts an annular inner race member 28 of bearing 20. Outer race member 29 of bearing 20 is isolated from clutch cover 11 via vibration isolating polymeric annular member 30 in accordance with the Applicant's co-pending application WO99/64759. The component 22 of housing 21,22 is connected by a circlip 31 with clutch release bearing 18.

As will be appreciated, pressurisation of working chamber 24 via inlet pipe 25 results in the axial displacement of housing 21, 22 away from piston 23 which in turn draws release bearing 18 to the right as viewed in figure 1 and thus pulls on diaphragm spring 14 and hence releases the clutch.

In accordance with the present invention the housing 21,22 of the concentric slave cylinder 17 is provided with a first abutment means in the form of a roller 32 which contacts second abutment means in the form of flanges 33 and 34 formed integrally on the inside of the encircling clutch housing 35. Roller 32 comprises a headed pin 36 which supports an annular plastics bearing 37 on which a rubber roller element 38 is carried. The pin 36 is received in a bore 39 in housing 21,22 and is located in the housing by a roll pin 40 which extends through a bore 41 in the pin 36.

As the housing 21,22 of the concentric slave cylinder 17 moves axially relative to the piston 23 during the engagement/disengagement of the clutch (see arrows Z) the roller element 38 rolls up and down the flange 33 and hence supports the concentric slave cylinder against its natural tendency to rotate in the direction Y which is the direction of rotation of the associated clutch cover 11. The second flange 34 is provided to prevent rotation of the concentric slave cylinder to any significant extent in the opposite direction during reversals of torque through the clutch such as will occur during starting and stopping of the vehicle engine.

As will be appreciated, the rolling contact of roller element 38 on flanges 33 and 34 results in the prevention of rotation of concentric slave cylinder 17 about the X-X of the clutch without generating any significant frictional resistance to the axial movement of cylinder 17.

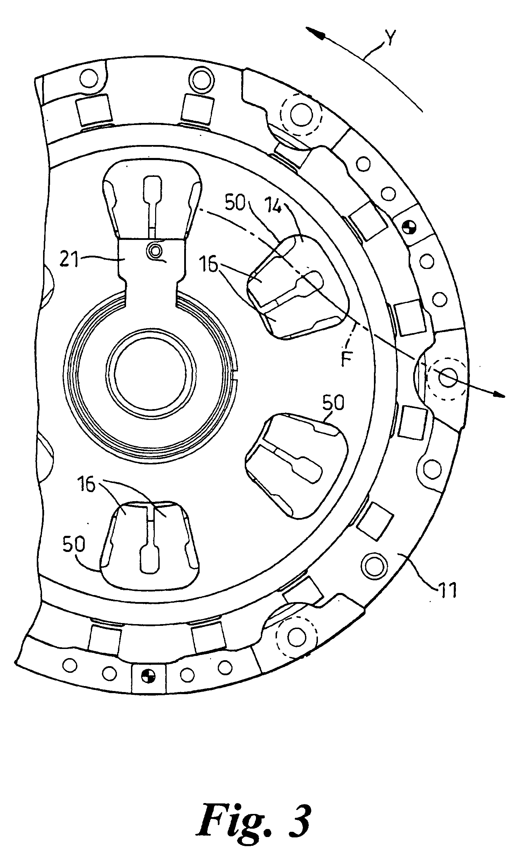

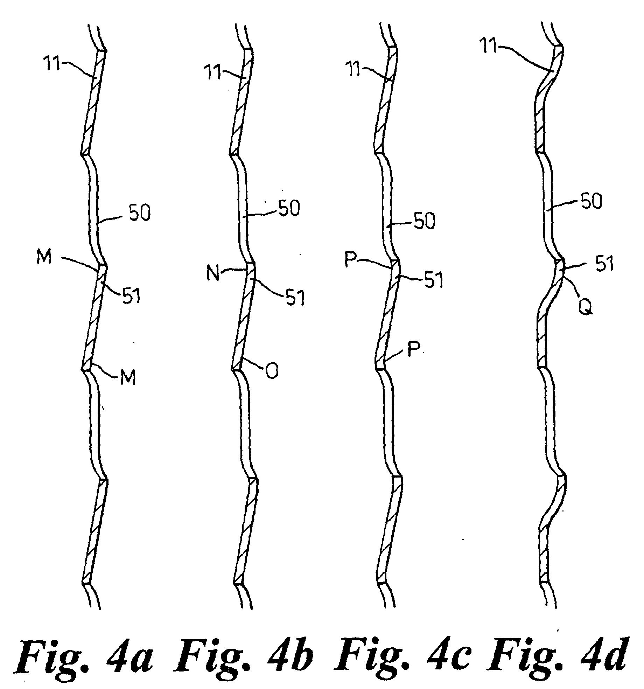

In accordance with a further aspect of the present invention shown in figures 3 and 4 the clutch cover 11 is provided with apertures 50 which are formed in the cover to provide vanes 51 for promoting air flow (see arrow F) into the cover via apertures 50 and out of the cover at apertures in its radially outer peripheral zones where, for example, the torque straps are attached. The face of the pressure plate adjacent the diaphragm spring 14 may be provided with cut-outs or channels to promote radially outward flow of the air for cooling purposes.

Figures 4a to 4d shows various alternative shapes for the apertures 50 and associated vanes 51 to promote the above described air flow. In figure 4a each vane has a straight entry and exit shape M, in figure 4b the entry N is radiused and exit O is straight, in figure 4c the entry and exit P are both radiused, and in figure 4d the entry Q is of a more exaggerated curved form.

## Claims

1. A clutch assembly comprising:-
- a clutch cover (11),
- a pressure plate (12) mounted on the cover,
- spring means (14) biasing the pressure plate away from the cover to engage the clutch,
- lever means (16) for releasing the clutch, and
- an annular hydraulic slave cylinder (17) mounted on the cover via a support bearing (20), the slave cylinder moving axially relative to the cover when actuated to move the lever means and hence release the clutch,
- the assembly being **characterised by** the provision of first abutment means (32) mounted on the slave cylinder for rolling contact with second abutments means (33,34) carried by an enclosing clutch housing (35) as the slave cylinder (17) moves axially during actuation of the clutch, the rolling contact of said first and second abutment means resisting rotation of the slave cylinder about the axis of rotation (X-X) of the clutch cover (11).

2. A clutch assembly according to claim 1 **characterised in that** one of the abutment means comprises a roller (32) which rolls along the other abutment means which is in the form of a flange (33,34).

3. A clutch assembly according to claims 1 or 2 **characterised in that** the roller (32) rolls between two circumferentially spaced flanges (33,34) carried on a surrounding clutch housing (35).

4. A clutch assembly according to any one of claims 1 to 3 **characterised in that** the slave cylinder (17) comprises an annular piston (23) received in an annular bore in a slave housing (21,22) to define a working chamber (24), the slave housing (21,22) being connected with the lever means (16) via a clutch release bearing (18) so that pressurisation of the working chamber axially moves the slave housing to disengage the clutch.

5. A clutch assembly according to any one of claims 1 to 4 **characterised in that** a vibration isolating means (30) is provided between the clutch cover (11) and the slave cylinder (17).

6. A clutch assembly according to any one of claims 1 to 5 **characterised in that** the clutch cover (11) includes vane means (51) for promoting a flow of air through apertures (50) in the cover to cool the pressure plate (12).

7. A clutch cover assembly comprising:-
- a clutch cover (11),
- a pressure plate (12) mounted on the cover, and
- spring means (14) biasing the pressure plate away from the cover to engage the clutch,
- the assembly being **characterised in that** vane means (51) are formed on the cover (11) for promoting a flow of air through apertures (50) in the cover to cool the pressure plate (12).

8. A clutch assembly according to claim 7 **characterised in that** the vane means (51) is shaped to draw air into the cover through the apertures (50), the air subsequently exiting through outer peripheral zones of the cover
